# EUROPEAN PATENT APPLICATION

(11) **EP 1 074 285 A2**
(43) Date of publication of application: **07.02.2001**
(21) Application number: 00116533.1
(22) Date of filing: 31.07.2000
(51) Int. Cl.: A63F 13/10

(54) **Game-development control method, game machine, and recording medium for use therewith**

(30) Priority: 05.08.1999 JP 25471399
(71) Applicant: Konami Corporation, Minato-ku, Tokyo (JP); KCE Tokyo Inc., Tokyo (JP)
(72) Inventor: Tarao, Masayuki, c/o KCE Tokyo Inc., Tokyo (JP); Yamashita, Akira, c/o KCE Tokyo Inc., Tokyo (JP)
(74) Representative: Manitz, Finsterwald & Partner

(57) **Abstract**

A game-development control method is executed by a computer (11). The computer (11) includes a control unit (200) for controlling a predetermined display unit (25) to display, in accordance with a game scenario, a plurality of mate characters relating to phenomena on the game scenario and to a player character provided with a plurality of characterizing personality elements including a changeable element. The mate characters are provided with a plurality of personality elements which include a changeable element and which are common to the personality elements provided to the player character. The control unit (200) develops a game based on the game scenario in accordance with a change in the personality elements of each of the mate characters which is caused by an operation by a game player. The control unit (200) records the personality elements of each of the mate characters on a recording medium, and reads the recorded personality elements so that the change in the personality elements is reflected in an action of each of the mate characters.

## Description

### BACKGROUND OF THE INVENTION

### 1. Field of the Invention

The present invention relates to games, and in particular, to technology for realizing a simulation video game which displays, in accordance with a game scenario, phenomena relating to the game scenario and a plurality of mate characters relating to a player character manipulated by a game player, and which develops the contents of the game scenario particularly relating to human relations in accordance with operations by the game player.

### 2. Description of the Related Art

There are simulation video games in which a game player manipulates a player character to have a conversation with a plurality of mate characters displayed on a display and in which the game player changes characteristics of the player character so that human relations between the player character and the mate characters can change. The game player enjoys the change in the human relations. These video games are realized as, for example, love-simulation games, which are popular in that a game player can enjoy virtual love with a mate character having responses similar to a real person.

In the games of this type, by preassigning, for example, a plurality of personality elements for characterizing the player character, and presetting the personality elements so that responses from each mate character changes when the personality elements of the player character change, the mate character can show responses similar to those in an actual human relationship.

By way of example, the player character can be characterized by points such as "whether the player character is excellent in appearance", "whether the player character is excellent in exercise ability", "whether the player character is skilled at academic ability of subjects of human science", "whether the player character is skilled at academic ability of subjects of science", "whether the player character is excellent in sense of beauty", and "whether the player character has encyclopedic knowledge", and the mate character can be set so as to "tend to like a person excellent in appearance", "tend to like a person excellent in exercise ability" or "tend to like a person skilled at academic ability of subjects of human science". The game player performs operations so that the personality elements of the player character are set to those liked by the mate character, whereby a situation is created in which the mate character, which is selected as the game player's type, likes the player character, which represents the game player. This process is such that the process of formation of human relations in the actual world, in which a person gets appreciation from another person of his or her type by making an effort and obtains a resultant favor, is reproduced as a game. This is an easily understandable and strong incentive for the game player to continue the game.

A type of game that uses the above-described technique of characterizing the player character can sufficiently entertain the game player. However, by setting the main part so as to respond as an actual person does, the contents of the game can be further deepened.

In the above-described technique, by setting the characteristics of the player character to be variable, the response of the mate character to the player character changes. Although the above-described technique controls and changes the characteristics of the player character, the characteristics of the mate character itself does not change. In actual human relations, it is common that two persons influence each other. Thus, if a process in which two persons influence each other to cause a change in the characteristics of each person can be reproduced between the player character and the mate character, the entertaining features of this type of game can be further enhanced.

### SUMMARY OF THE INVENTION

Accordingly, the present invention is made for embodying the above-described knowledge, and an object thereof is to provide a game-development control method and a game machine that reproduce, in the form of a game, actual human relations in which persons influence mutually to cause a change in the characteristics of each person, and a recording medium used with the method and the machine.

To this end, according to an aspect of the present invention, the foregoing object is achieved through provision of a game-development control method for execution on a computer including a control unit for controlling a predetermined display unit to display, in accordance with a game scenario, a plurality of mate characters relating to phenomena on the game scenario and to a player character provided with a plurality of characterizing personality elements including a changeable element, the mate characters being provided with a plurality of personality elements which include a changeable element and which are common to the personality elements provided to the player character, the control unit developing a game based on the game scenario in accordance with a change in the personality elements of each of the mate characters which is caused by an operation by a game player. The control unit records the personality elements of each of the mate characters on a recording medium, and reads the recorded personality elements so that the change in the personality elements is reflected in an action of each of the mate characters.

In the game-development control method, not only a player character is provided with a plurality of personality elements but also each mate character is provided with personality elements common to the personality elements provided to the player character. Since the present invention sequentially changes the personality elements and causes actions of the mate character to reflect the change, the actions of the mate character change from time to time, whereby the actions of the mate character, which are similar to actual human relations, can be reproduced in the form of a game.

In this respect, in the game-development control method of the present invention, it is preferable to reflect the personality elements of each mate character in the actions of the mate character in the progress of the scenario. By reflecting the personality elements of the mate character in the actions of the mate character, the mate character acts similarly to the player character in the progress of the scenario, whereby the actions of the mate character are set to be closer to those in the real society.

In the present invention, a process may be included which sets at least one of the personality elements of each of the mate characters, which are common to the personality elements of said player character, so as to approach one of the personality elements of said player character. If this is replaced by the case of the real human relations, it is indicated that the mate character is influenced by the player character to act similarly to the player character. This process can reproduce, in the form of a game, the actual human relations in which persons mutually influence to change their characteristics.

In the present invention, the personality elements of each of the mate characters may be changed based on a change in a preference parameter as a value obtained by quantifying the preference of each of the mate characters for said player character. This corresponds to, in the actual human relations, the fact that a person is easily influenced by another person for whom the person has a preference. According to this method, circumstances more similar to the actual human relations can be reproduced as a game.

The "quantifying" in this Specification means the case where the degree of preference of the mate character for the player character is numerically expressed, the case where the degree of preference of the mate character for the player character is classified into a plurality of levels, etc.

In the game-development control method of the present invention, the personality elements of each mate character are changed based on a change in the preference parameter. In this case, there is a freedom in that how the change in the preference parameter and the change in the personality elements of the mate character are correlated to each other. For example, as the value of the preference parameter of the mate character increases, the personality elements of the mate character can be set to approach the personality elements of the player character. When the preference parameter of the mate character exceeds a preset threshold value, the personality elements provided to the mate character can be set to approach the personality elements of the player character at that time. In the latter case, a small load of a process for executing the method is only required.

In the present invention, the personality elements of each of the mate characters may be changed for each lapse of a predetermined time, and the change in said preference parameter may be reflected in the change for each lapse of the predetermined time.

Although the threshold value is set to be identical for all the mate characters, the threshold value can be set to differ for each mate character. Among persons, there are those who tend to like the opposite sex and those who do not tend. Also, there are those who are easily influenced by another person and those who are not easily influenced. By setting the threshold value to differ for each mate character, the circumstances can be reproduced as a game, whereby the entertaining features of a game to which the game-development control method is applied are further enhanced.

In the game-development control method of the present invention, the personality parameter of the mate character which correspond to the personality parameter that is maximum among the personality elements provided to the player character can be set to approach the personality parameter of the player character. The process of setting the personality elements of the mate character to approach the personality elements of the player character may be performed for all the personality elements, but may be performed for one personality element, as described. In particular, by using the one personality element as a personality element of the mate character which corresponds to one of the personality elements provided to the player character which has a maximum parameter, a change in the personality elements of the mate character can be understandably displayed for the game player.

According to another aspect of the present invention, the foregoing object is achieved through provision of a game machine including: an input unit for receiving operations by a game player; a control unit control unit for controlling a predetermined display unit to display, in accordance with a game scenario, a plurality of mate characters relating to phenomena on the game scenario and to a player character provided with a plurality of characterizing personality elements including a changeable element, the mate characters being provided with a plurality of personality elements which include a changeable element and which are common to the personality elements provided to the player character, the control unit developing a game based on the game scenario in accordance with a change in the personality elements of each of the mate characters which is caused by an operation by a game player; and a recording medium. The control unit have the functions of: recording the personality elements of each of the mate characters on the recording medium, and the recorded personality elements on demand; detecting a preference parameter obtained by quantifying the preference of each of the mate characters for the player character, and determining a change in the preference parameter by referring to the preference parameter; and setting, based on the change in the preference parameter, at least one of the personality elements which are provided to each of the mate characters and are common to the personality elements of the player character so as to approach the corresponding personality element of the player character at the time the change occurs, and setting the change in the personality element to be reflected in an action of each of the mate characters.

According to a further aspect of the present invention, the foregoing object is achieved through provision of a computer-readable recording medium containing a program code for controlling a computer so that, when controlling a predetermined display unit to display, in accordance with a game scenario, a plurality of mate characters relating to phenomena on the game scenario and to a player character provided with a plurality of characterizing personality elements including a changeable element, the mate characters being provided with a plurality of personality elements which include a changeable element and which are common to the personality elements provided to the player character, and developing a game based on the game scenario, the computer executes the steps of: recording the personality elements of each of the mate characters on the recording medium, and the recorded personality elements; detecting a preference parameter obtained by quantifying the preference of each of the mate characters for the player character, and determining a change in the preference parameter by referring to the preference parameter; and setting, based on the change in the preference parameter, at least one of the personality elements which are provided to each of the mate characters and are common to the personality elements of the player character so as to approach the corresponding personality element of the player character at the time the change occurs, and setting the change in the personality element to be reflected in an action of each of the mate characters.

According to the present invention, entertaining features of a video game can be enhanced because actual human relations in which persons influence each other and their characteristics change can be reproduced as a game.

### BRIEF DESCRIPTION OF THE DRAWINGS

Fig. 1 is a block diagram showing a game machine to which the present invention is applied;
Fig. 2 is a block diagram showing a video game machine according to an embodiment of the present invention;
Fig. 3 is a block diagram showing a mate-character-data control unit 230 shown in Fig. 2;
Figs. 4A, 4B, 4C, and 4D are graphs showing examples of the preference parameter and personality parameters of mate characters;
Fig. 5A is a graph showing examples of the preference parameter and personality parameters of a player character, and Fig. 5B is a graph showing an example of a change in the personality parameters of a mate character; and
Fig. 6 is a flowchart showing a game-development control method according to an embodiment of the present invention.

### DESCRIPTION OF THE PREFERRED EMBODIMENTS

Preferred embodiments of the present invention are described below with reference to the accompanying drawings.

At first, a game-machine main part which is associated with a recording medium to constitute a video game machine is described. This embodiment only describes the case where a love-simulation game is executed by the video game machine.

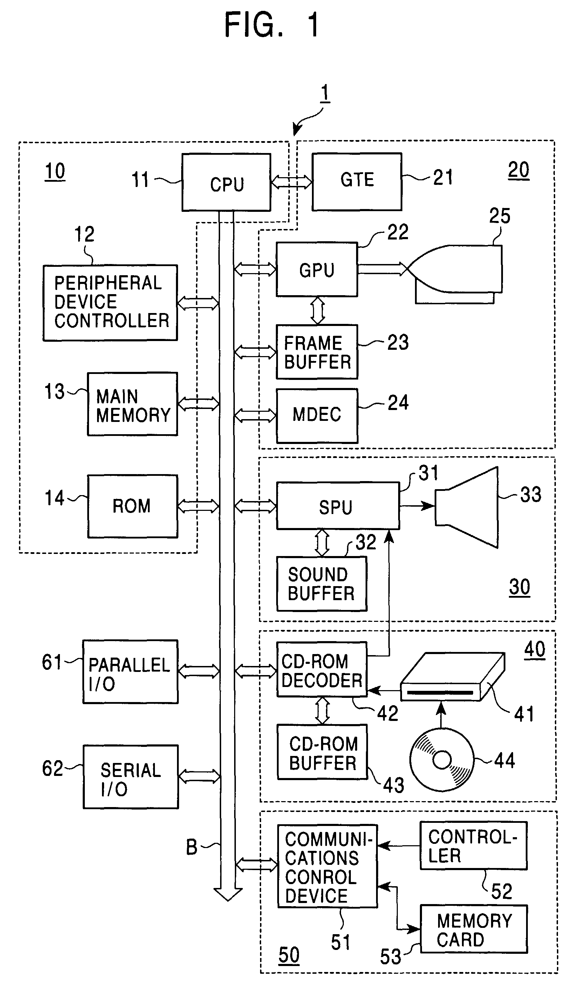

The game-machine main part reads a program code (hereinafter referred to as a "game program") for executing the game from a CD-ROM as an example of the recording medium of the present invention, and executes the game program, whereby actions of player characters and mate characters in accordance with instructions from a game player, and environments for actions of the player characters, are displayed and controlled. A specific example of the game-machine main part is as shown in Fig. 1. A game-machine main part 1 includes a main controller 10, an image processor 20, an audio processor 30, a disk controller 40, a communications control unit 50, and a main bus B for connecting the functional units 10 to 50 so as to bidirectionally communicate with one another.

The main controller 10 includes a central processing unit (CPU) 11, a peripheral device controller 12 for performing interruption control, direct-memory-access (DMA) transfer control, etc., a main memory 13 for temporarily the game program read from the CD-ROM, and a read-only memory (ROM) 14 including an operating system (OS) that controls the image processor 20 and the audio processor 30. The CPU 11 is a reduced instruction set computer (RISC). The CPU 11 controls basic operations in the entirety of the game-machine main part 1, and generates a plurality of functional blocks (described below) by executing the game program stored in the main memory 13.

The image processor 20 includes a geometry transfer engine (GTE) 21 that performs high-speed coordinate transformation, etc., on data stored in the main memory 13, a graphics processing unit (GPU) 22 that forms various game character images and environment images by rendering polygons and sprites (such as triangles and tetragons) based on rendering instructions from the CPU 11, a frame buffer 23 that stores images rendered by the GPU 22, and an image decoder (MDEC) 24 that decodes compressed image data as required. The data rendered (stored) in the frame buffer 23 are read and displayed on a display device.

The audio processor 30 includes a sound-reproducing processing unit (SPU) 31 that generates game tones and effect sounds, a sound buffer 32 that stores data read from the CD-ROM, such as sounds and tones, and sound-source data, etc., and a speaker that outputs the tones, the effect sounds, etc., generated by the SPU 31. The SPU 31 includes, for example, an adaptive-differential-pulse-code-modulation decoding function that decodes adaptive-differential-pulse-code-modulated audio data as 4-bit differential signals obtained by performing adaptive differential pulse code modulation on 16-bit audio signals, a function of reproducing effect sounds by reading the sound source data stored in the sound buffer 32, and a modulating function of modulating the audio data stored in the sound buffer 32 for sound reproduction. These functions enable the audio processor 30 to be used as a sampling sound source that generates, in accordance with instructions from the CPU 11, tones, effect sounds, etc., based on the audio and other data stored in the sound buffer 32.

The disk controller 40 includes a disk drive 41 that reads a game program recorded on a CD-ROM 44, a CD-ROM decoder 42 that decodes data recorded with error-correction codes, and a buffer 43 that temporarily stores data read from the disk drive 41. The decoder 42 is also included in the audio processor 30.

The data that are recorded on the CD-ROM 44 and that are read by the disk drive 41 includes not only the ADPCM data but also pulse-code-modulated (PCM) data obtained by performing analog-to-digital conversion on the audio signals. Audio data in the form of ADPCM data in which differences of 16-bit digital data are represented by four bits are error-corrected and decoded by the decoder 42. The error-corrected and decoded data are supplied to the SPU 31, and are processed so as to be converted from digital form to analog form. After that, the processed data are used to drive the speaker 33. An audio output from the decoder 42 is temporarily input to the SPU 31, and the sum of the audio output and an output from the SPU 31 becomes a final audio output after passing through a reverb unit.

The communications control unit 50 includes a communications control device 51 that controls communication with the CPU 11 via a main bus B, a controller 52, and a memory card 53.

A controller 52 is an interface that allows the game player to input instructions, and includes a start key for instructing the start of the game and restart, a reset key for instructing game resetting, selection keys that instruct a vertical or horizontal movement of a player character and that position a cursor on various menus and items which are displayed, and instruction keys for instructing detailed actions of the player character and designating a selected menu. The controller 52 transmits the state of each key to the communications control device 51 by synchronous communications. The communication control unit 51 transmits the state of each key of the controller 52 to the CPU 11. This transmits an instruction from the game player to the CPU 11, whereby the game-machine main part 1 can be operated in accordance with the intention of the game player.

When the CPU 11 must store settings of the game being executed and results obtained at the end or middle of the game, the CPU 11 transmits data at that time to the communications control device 51, and the communications control device 51 stores the data from the CPU 11 in the memory card 53. Since the memory card 53 is separated from the main bus B, it can be connected or disconnected, with the main power supplied to the game-machine main part 1. This enables the settings of the game. etc., to be stored in a plurality of memory cards like the memory card 53.

The game-machine main part 1 is provided with a parallel input/output (I/O) port 61 and a serial input/output (I/O) port 62 which are connected to the main bus B. The game-machine main part 1 can be connected to peripheral devices via the parallel I/O port 61, and can communicate with another video game machine via the serial I/O port 62.

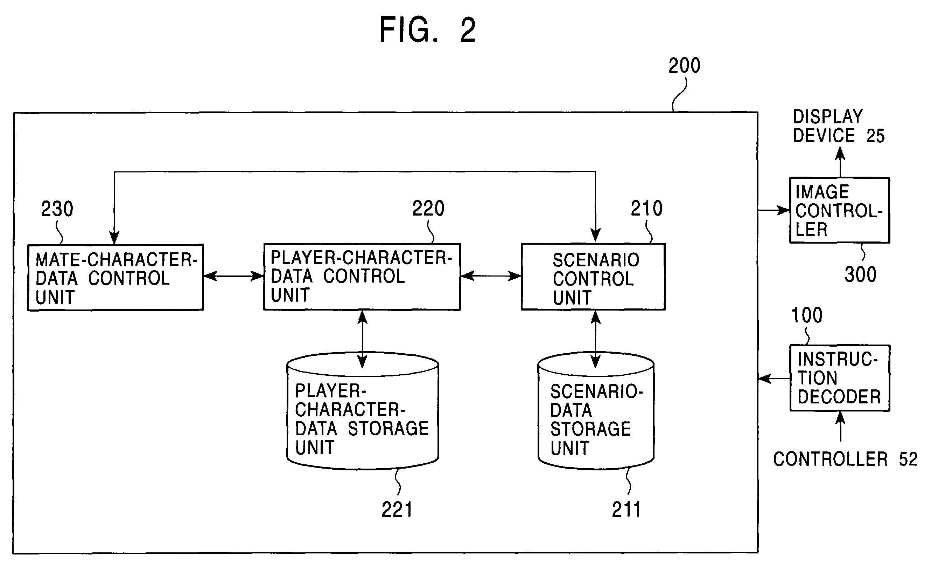

When the main power is supplied to the game-machine main part 1 having the above-described construction, or reset processing is performed, with the CD-ROM 44 loaded in the disk drive 41, the CPU 11 executes the OS stored in the ROM 14, thereby performing initialization in the entirety of the game-machine main part 1, such as confirmation of operations, and controlling the disk controller 40 to read and execute the game program stored in the CD-ROM 44. By executing the game program, the CPU 11 generates functional blocks as shown in Fig. 2 and realizes a video game machine 2 of the present invention.

The video game machine 2 includes an instruction decoder 100, a controller 200, an image controller 300 for controlling an image displayed on the display device 25.

The instruction decoder 100 decodes instructions from the controller 52, and performs control required for the instructions. The instructions includes specifying the speech of the player character (reflecting the intention of the game player) by selecting an option in addition to those essential in playing the game, such as starting the game, interrupting the game, restarting the game, ending the game, and instructing actions of the player character. At the start or restart of the game, the instruction decoder 72 establishes environment required for executing the game by loading the game program stored in the CD-ROM and data saved in the memory card 53. At the interruption or end of the game, game data such as points by characters, which have been obtained up to the time, are saved in the memory card 53.

The controller 200 includes a scenario control unit 210, a player-character-data control unit 220, and a mate-character-data control unit 230. The controller 200 instructs the image controller 300 to display a plurality of mate characters or phenomena relating to a player character manipulated by the game player in accordance with a game scenario. The image controller 300 generates an image in accordance with the instruction on the display device 25. The scenario control unit 210 is connected to a scenario-data storage unit 211, and instructs the image controller 300 so that the game is developed on the display device 25 based on the game scenario in accordance with an operation input by the game player.

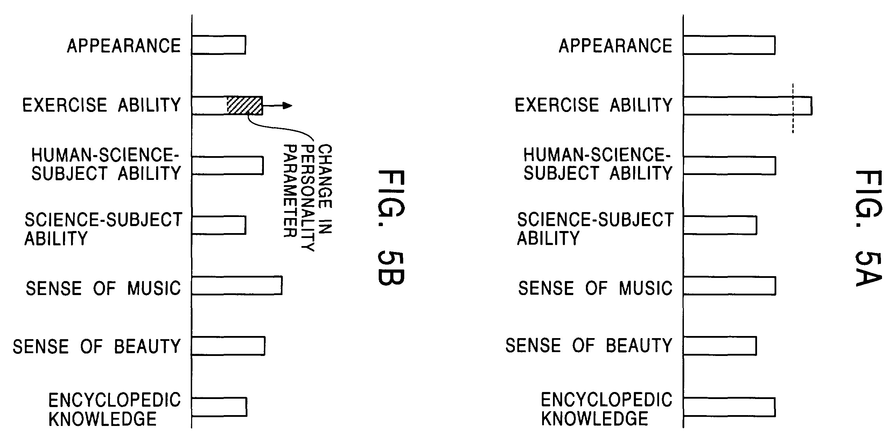

The player-character-data control unit 220 is connected to a player-character-data storage unit 221, and controls the player-character-data storage unit 221 to store data on a plurality of personality elements provided to the player character at the time. The stored personality elements are the items shown in Fig. 5A, "appearance", "exercise ability", "human-science-subject ability", "science-subject ability", "sense of music", "sense of beauty", and "encyclopedic knowledge". These items are represented by personality parameters obtained by quantifying the personality elements. In this example, the quantification is in the form of numerical expressions.

In Fig. 5A, for convenience of understanding, the numerically expressed parameters are indicated by bar graphs. The longer each bar graph, the higher each characteristic.

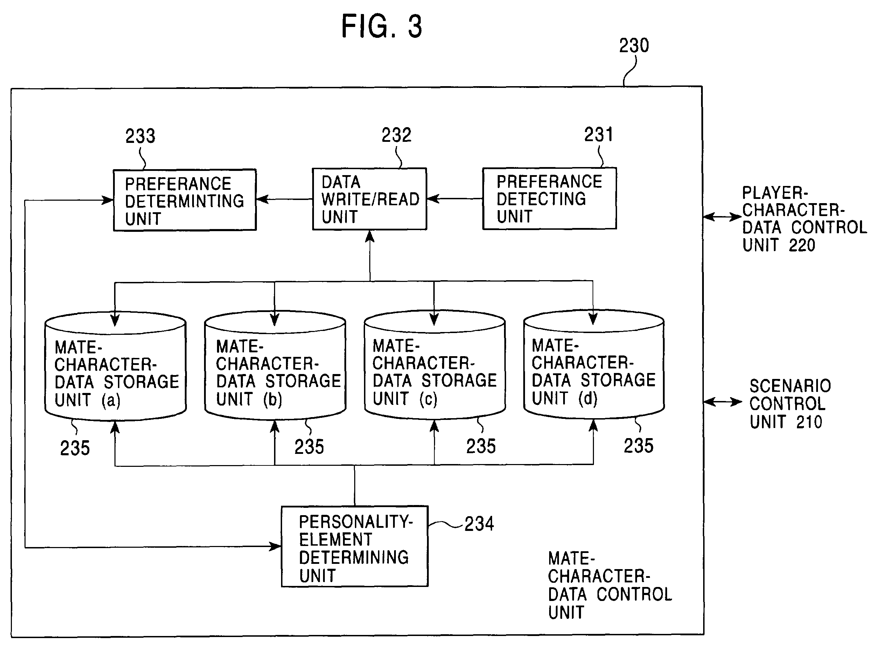

The mate-character-data control unit 230 includes a preference detecting unit 231, a data write/read unit 232, a preference determining unit 233, a personality-element determining unit 234, and mate-character-data storage units (a), (b), (c), and (d) (235) as recording media, as shown in Fig. 3.

The preference detecting unit 231 quantifies a preference parameter of each mate character obtained at the time, that is, the degree of a preference of each mate character for the player character at the time, and detects the value. The preference detecting unit 231 detects the value numerically in this example. The data write/read unit 232 has functions of controlling the mate-character-data storage units (a), (b), (c), and (d) (235) to store preference parameter data detected by the preference detecting unit 231, and reading the personality parameter data and preference parameter data stored in the mate-character-data storage units (a), (b), (c), and (d) (235). The data are sent to the scenario control unit 210, and are used to control the game scenario.

In the game played in this embodiment, four mate characters (a), (b), (c), and (d) appear, and data on the mate characters (a) to (d) are stored in the mate-character-data storage units (a) to (d) (235), respectively. The personality elements provided to each mate character are set to coincide with those provided to the player character. The preference parameter and personality elements of each mate character are stored in each of the mate-character-data storage units (a) to (d) (235) in the form shown in Fig. 5A.

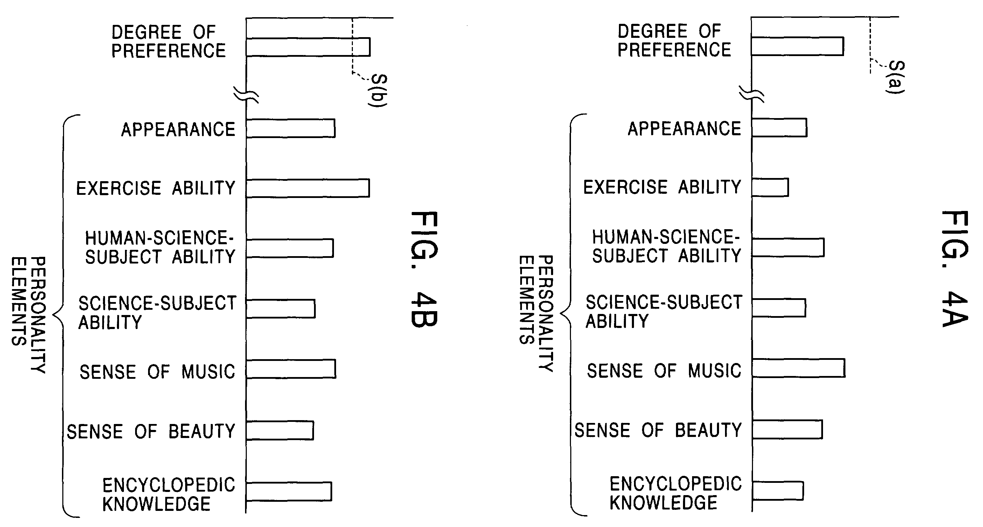

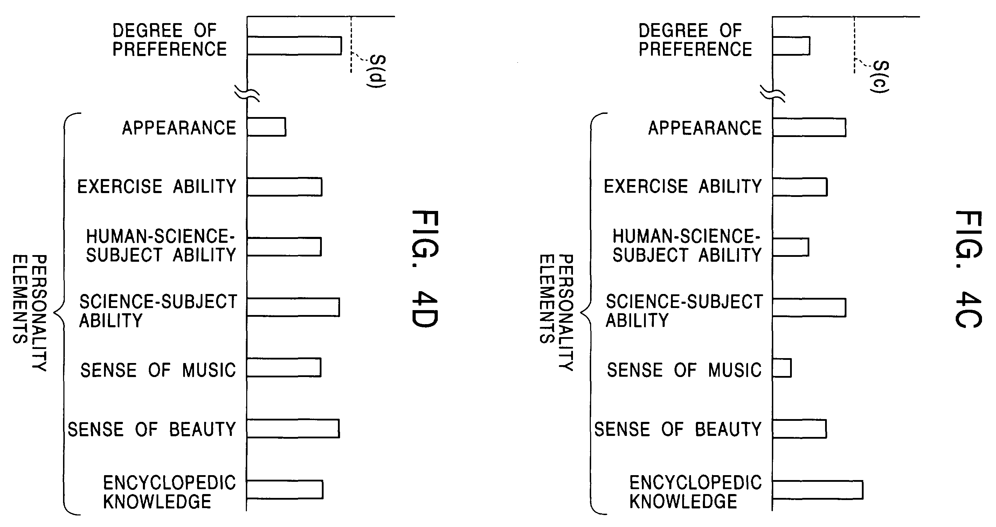

For convenience of understanding, the parameters of the mate characters (a) to (d), which are numerically expressed, are indicated by the bar graphs shown in Figs. 4A, 4B, 4C, and 4D, respectively. The longer the bar graph of the preference parameter, the greater the degree of a preference of each mate character for the player character. The preference parameters of the mate characters (a) to (d) have threshold values S(a), S(b), S(c), and S(d). The preference parameters of the mate characters (a) to (d) have different values as threshold values S(a) to S(d).

The preference determining unit 233 receives the preference parameter data of each mate character, determines whether the preference parameters of the mate characters (a) to (d) are greater than the respective threshold values S(a) to S(d), and notifies the personality-element determining unit 234 that one of the mate characters (a) to (d) has a preference parameter greater than the corresponding threshold value. In accordance with the notification, the personality-element determining unit 234 determines the personality elements of each mate character.

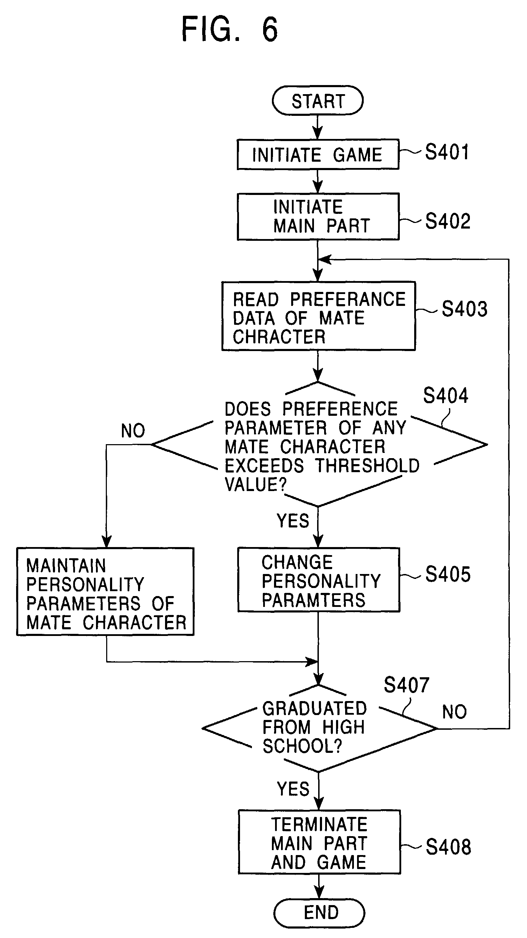

Next, an example of a method for controlling the development of the love-simulation game executed by the above-described video game machine 2 is described below. The flow of the control method is shown in Fig. 6.

When the game is initiated (step S401), a setting screen is displayed on the display device 25. The game player operates the controller 52 to name the player character and to determine an initial value of each personality parameter.

The main part of the game is initiated (step S402). Specifically, the scenario control unit 210 reads the data from the scenario-data storage unit 211, and develops the game based on the main part scenario in accordance with a predetermined flow. The image controller 300 displays the images of a street of stores and buildings, scenes in school, each mate character, etc.

The game player operates the controller 52 in time to each game development, whereby the player character has a conversation with each mate character, and the personality elements of the player character are changed. Specifically, by operating the controller 52 so that the player character has a personality liked by a mate character which is the type of the game player, the human relation between the mate character and the player character is changed, while the personality elements of the player character is being changed.

Data on a change in the personality elements of the player character is sent via the player-character-data control unit 220, and is stored in the player-character-data storage unit 221. The data on a change in the personality elements is read as required, and is sent to the scenario control unit 210. The development of the game is changed based on the data.

With the progress of the game, the preference parameter of each mate character changes. The preference parameter of each mate character at the time is detected and is numerically expressed by the preference detecting unit 231. The numerically expressed parameter of each mate character is recorded in each mate-character-data storage unit 235 via the data write/read unit 232.

The stored preference parameter of each mate character is read from each mate-character-data storage unit 235 via the data write/read unit 232, as required (step S403). The read preference parameter is sent to the preference determining unit 233. The preference detecting unit 233 determines whether the preference parameter of each mate character exceeds the corresponding threshold value (S(a), S(b), S(c), or S(d)) (step S404). When any one of the preference parameters of the mate characters (a) to (d) exceeds the corresponding threshold value (S(a), S(b), S(c), or S(d)), the preference determining unit 234 is notified of the satisfaction of the condition in step S404. When any one of the preference parameters of the mate characters (a) to (d) is not greater than the corresponding threshold value (S(a), S(b), S(c), or S(d)), the preference determining unit 234 is notified of the dissatisfaction of the condition in step S404.

When any one of the preference parameters of the mate characters (a) to (d) exceeds the corresponding threshold value (S(a), S(b), S(c), or S(d)) ("YES" in step S404), the personality elements of the mate character are set to approach those of the player character at the time, and the new personality elements are stored in the corresponding mate-character-data storage unit 235 (step S405). For each mate character which has a preference parameter less than the corresponding threshold value (S(a), S(b), S(c), or S(d)), its personality elements are changed.

In the example shown in Fig. 4B, the personality elements of the mate character (b) change since its preference parameter exceeds threshold value S(b). In this embodiment, the personality elements of the mate character are changed in the form shown in Figs. 5A and 5B. In other words, one of the personality elements of the mate character, which corresponds to the maximum one of the personality elements of the player character at the time, is changed so as to have a value equal to the maximum personality parameter of the player character. As shown in Fig. 5A, the exercise ability of the mate character increases since, among the values of the personality elements of the player character, the value of the exercise ability is maximum. In the game, the personality elements of the player character are reflected in actions of each mate character. Thus, the preference parameter change appears in the game in a form in which a mate character having a preference for the player character imitates each action of the player character. The personality elements of the mate character may be set so as to approach the personality elements of the player character in a single process, or may be set so as to gradually approach the personality elements of the player character in separate processes.

Each personal parameter of each mate character may be periodically changed, with it separated from a change in the preference parameter. In this change, based on a predetermined process, and in view of random factors, each personality element may be changed. In addition, in the periodic change, the change in the preference parameter can be reflected.

When any one of the preference parameters of the mate characters (a) to (d) is less than the corresponding threshold value (S(a), S(b), S(c), or S(d)) ("NO" in step S404), the personality-element determining unit 234 stores the personality elements of the mate character in the corresponding mate-character-data storage unit 235 without changing the personality elements of the mate character (step S406).

The main part scenario is terminated when the story of the game has reached graduation from high school. The scenario control unit 210 determines whether the game has developed up to the high school graduation (step S407). If the determination is negative ("NO" in step S407), the game is developed up to the high school graduation. If the determination is affirmative ("YES" in step S407), a screen on which one mate character confesses its love to the player character is displayed on the display device 25, and the game is terminated (step S408).

## Claims

1. A game-development control method for execution on a computer (11) including a control means (200) for controlling a predetermined display unit (25) to display, in accordance with a game scenario, a plurality of mate characters relating to phenomena on said game scenario and to a player character provided with a plurality of characterizing personality elements including a changeable element, the mate characters being provided with a plurality of personality elements which include a changeable element and which are common to the personality elements provided to said player character, said control means (200) developing a game based on said game scenario in accordance with a change in the personality elements of each of the mate characters which is caused by an operation by a game player,
wherein said control means (200) records the personality elements of each of the mate characters on a recording medium, and reads the recorded personality elements so that the change in the personality elements is reflected in an action of each of the mate characters.

2. A game-development control method according to Claim 1, further including a process for setting at least one of the personality elements of each of the mate characters, which are common to the personality elements of said player character, so as to approach one of the personality elements of said player character.

3. A game-development control method according to one of Claims 1 and 2, wherein the personality elements of each of the mate characters are changed based on a change in a preference parameter as a value obtained by quantifying the preference of each of the mate characters for said player character.

4. A game-development control method according to Claim 3, wherein the personality elements of each of the mate characters are changed for each lapse of a predetermined time, and the change in said preference parameter is reflected in the change for each lapse of the predetermined time.

5. A game-development control method according to one of Claims 3 and 4, wherein, when said preference parameter exceeds a preset threshold value, said control means (200) sets the personality elements of each of the mate characters to approach the personality elements of said player character.

6. A game-development control method according to Claim 5, wherein the threshold value is set to differ depending on each of the mate characters.

7. A game-development control method according to one of Claims 1 to 6, wherein the personality elements of said player character and the personality elements of the mate characters are represented by personality parameters obtained by quantifying the degrees of a plurality of characteristics.

8. A game-development control method according to Claim 7, wherein one of the personality elements of each of the mate characters, corresponding to a maximum personality element among the personality elements of said player character, is set to approach said maximum personality element.

9. A game machine, comprising:
input means (52) for receiving operations by a game player;
control means (200) for controlling a predetermined display unit (25) to display, in accordance with a game scenario, a plurality of mate characters relating to phenomena on said game scenario and to a player character provided with a plurality of characterizing personality elements including a changeable element, the mate characters being provided with a plurality of personality elements which include a changeable element and which are common to the personality elements provided to said player character, said control means (200) developing a game based on said game scenario in accordance with a change in the personality elements of each of the mate characters which is caused by an operation by a game player; and
a recording medium;
wherein said control means (200) have the functions of:
recording the personality elements of each of the mate characters on said recording medium, and the recorded personality elements on demand;
detecting a preference parameter obtained by quantifying the preference of each of the mate characters for said player character, and determining a change in said preference parameter by referring to said preference parameter; and
setting, based on the change in said preference parameter, at least one of the personality elements which are provided to each of the mate characters and are common to the personality elements of said player character so as to approach the corresponding personality element of said player character at the time the change occurs, and setting the change in the personality element to be reflected in an action of each of the mate characters.

10. A computer-readable recording medium containing a program code for controlling a computer (11) so that, when controlling a predetermined display unit (25) to display, in accordance with a game scenario, a plurality of mate characters relating to phenomena on said game scenario and to a player character provided with a plurality of characterizing personality elements including a changeable element, the mate characters being provided with a plurality of personality elements which include a changeable element and which are common to the personality elements provided to said player character, and developing a game based on said game scenario, said computer (11) executes the steps of:
recording the personality elements of each of the mate characters on said recording medium, and the recorded personality elements;
detecting a preference parameter obtained by quantifying the preference of each of the mate characters for said player character, and determining a change in said preference parameter by referring to said preference parameter; and
setting, based on the change in said preference parameter, at least one of the personality elements which are provided to each of the mate characters and are common to the personality elements of said player character so as to approach the corresponding personality element of said player character at the time the change occurs, and setting the change in the personality element to be reflected in an action of each of the mate characters.
